# EUROPEAN PATENT SPECIFICATION

(11) **EP 4 121 293 B1**
(45) Date of publication and mention of the grant of the patent: **26.04.2023**
(21) Application number: 22728249.8
(22) Date of filing: 10.05.2022
(51) Int. Cl.: B33Y 70/00, C09D 11/30, C09D 11/101

(54) **DUAL CURE EPOXY INKJET COMPOSITION**
ZWEIFACH HÄRTBARE EPOXIDTINTENSTRAHLZUSAMMENSETZUNG
COMPOSITION DE JET D'ENCRE ÉPOXY À DOUBLE DURCISSEMENT

(30) Priority: 09.06.2021 EP 21178537
(43) Date of publication of application: 25.01.2023
(73) Proprietor: ALTANA AG, DE-46483 Wesel (DE)
(72) Inventor: ASMACHER, Anne, 46483 Wesel (DE); SEUYEP, Denis Hervé, 46483 Wesel (DE); MARRECK, Lina-Sophie, 46483 Wesel (DE); RÖTTGER, Max, 46483 Wesel (DE)
(86) International application number: PCT/EP2022/062678
(87) International publication number: WO 2022/258285

(56) References cited:
- WO-A1-2019/129464
- WO-A1-2020/109769
- CN-A- 110 128 773
- KR-A- 20190 109 617
- US-A1- 2009 105 363

## Description

The present invention relates to an inkjet composition, its use, a process for printing a three-dimensional object and the three-dimensional object.

Three dimensional (3D) printing or additive manufacturing is a process in which a 3D digital model is manufactured by the accretion of construction material. The 3D printed object is created by utilizing the computer-aided design (CAD) data of an object through sequential construction of two dimensional (2D) layers that correspond to cross-sections of 3D objects. These layers were printed over one another with the proviso that each layer is rapidly cured (e.g. by UV curing) before the next layer is printed accordingly.

One way to perform said 3D printing is inkjet printing: In inkjet printing, tiny drops of ink (having a limited viscosity) are projected directly onto a receiver surface without physical contact between the printing device and the ink-receiver. The printing device stores the printing data electronically and controls a mechanism for ejecting the drops image-wise. Printing is accomplished by moving a print head across the ink-receiver or vice versa or both.

Three-dimensional inkjet printing is a relatively speedy and flexible printing method for the production of prototype parts, tooling and rapid manufacturing of three-dimensional complex structures directly from a CAD file. Radiation curable compositions for use in three-dimensional printing methods of complex structures are e.g. described in WO 2004/096514. However, there are generally many radiation curable compositions described in the art which might be used in the field of inkjet printing, like in WO 2019/129464, CN 110128773, KR 20190109617, WO 2020/109769 and US 2009/105363.

Challenges encountered with said 3D printing are poor mechanical properties such as low heat deflection temperature, brittleness and ageing meaning the embrittlement over time and/or under temperature change and/or humidity. Another challenge is the incomplete curing of the (initially) printed 3D object (so called "green body"). If the 3D object is cured completely during the 3D printing process, the interlayer adhesion is too weak and the print may fail.

However, uncured resin inside the final product is undesirable: First, uncured liquid resin leaking ("bleeding") from the printed 3D objects may cause health problems to end users because the liquid resin may contain reactive chemicals. Second, the printed 3D objects do not reach optimal mechanical performance because the uncured liquid resin may soften the object. Third, the uncured resin may cause problems in some industrial applications of the objects where high chemical inertia is required. In order to fully cure the printed "green body" objects (to avoid the said disadvantages), a corresponding post-curing of the 3D "green body" is necessary.

Thus, an appropriate inkjet printing ink has to combine (to fulfill) at the same time the following conditions: having a sufficient low viscosity (enables the printing of tiny drops through an inkjet nozzle), providing a high viscosity stability (e.g. should not polymerize in the printing apparatus prior the printing), being sufficiently precurable (each printed ink layer has to be pre-cured before the next layer is printed) and being efficiently post curable (fully curable in a subsequent step in order to provide the 3D object with the required quality properties).

Thus, it is an object to the present invention to provide an inject printing ink of high quality which fulfills the requirements described above.

The solution to this object is an inkjet composition having 1.0 - 4.5 mol/kg acryloyl groups comprising:
i) photo polymerization reactive compound (M) containing exactly one acryloyl group,
ii) photo polymerization reactive compound (N) containing at least two acryloyl groups,
iii) radical photoinitiator (R),
iv) epoxy compound (D) containing at least two epoxy groups and
v) epoxy curing catalyst (C), wherein
   (M) is different from (D) with the proviso that epoxy compound containing exactly one acryloyl group and additionally containing at least two epoxy groups should be subsumed to (D)
   and (N) is different from (D), with the proviso that epoxy compound containing at least two acryloyl groups and additionally containing at least two epoxy groups should be subsumed to (D),
   25 - 50 mol % of the contained acryloyl groups are provided by the reactive compound (N) and the molar ratio of contained acryloyl groups to contained epoxy groups of compound (D) is 0.3 to 1.5.

Acryloyl groups according to the present invention are defined as to be H₂C=CH-C(=O)- (which might be a part of an "acryl ester group" of the type H₂C=CH-C(=O)-O-). These groups are very reactive and efficient free radical polymerization groups (and much more reactive like e.g. meth acryl groups).

Photo polymerization reactive compound (M) "containing exactly one acryloyl group" means that not more and not less than one acryloyl group is contained.

(M) is different from (D) means that photo polymerization reactive compound (relevant species) containing exactly one acryloyl group and additionally containing at least two epoxy groups should be subsumed to (D) (and not to (M)). However, the use of such "hybrid"-components is not preferred (might be avoided).

Accordingly, (N) is different from (D) means that that photo polymerization reactive compound (relevant species) containing at least two acryloyl groups and additionally containing at least two epoxy groups should be subsumed to (D) (and not to (N)). However, the use of such "hybrid"-components is not preferred (might be avoided).

According to the present invention, the inkjet composition comprises with (M) and (N) photocurable compound (based on "photo initiation") and with (D) also thermocurable compound.

The photocurable compound is able to polymerize and/or to crosslink in a first step by free radical (photo) polymerization and the thermocurable compound reacts in a subsequent thermal post curing step (e.g. via a thermal initiated ionic polymerisation).

The epoxy curing initiator/catalyst (C) might be provided as a catalyst and/or as an initiator (in contrast to a catalyst: an initiator would be incorporated (e.g. as a kind of starting group) into the growing molecule). However, typically species of the curing/initiator catalyst (preferably 100 % of said species) are provided by ionic polymerization initiators.

The inkjet composition according to the present invention fulfills the relevant quality requirements:
The composition provides the basis for a sufficient low viscosity which enables the generation of tiny (ink jettable) ink drops. Additionally, the composition provides the basis concerning a sufficient viscosity stability which is a basic requirement to maintain a working printing process (e.g. gelling of the ink would block and even destroy the printer).

Furthermore, the inkjet composition according to the present invention allows the generation of a pre-product with sufficient mechanical properties, especially of a pre-product with a sufficient "green body strength": The green body strength describes the stability of the object after photo-curing and before thermo-curing. The green body strength is a measure on the stability and crosslinking of the photo-cured object. However, it is not desired to provide a green body strength which is too high: During post-processing (thermal curing) the UV-system guarantees the shape consistency, meaning it holds the thermal system in place before and during its curing/ immobilization. However, once the thermal system starts to cure and depending on its properties, internal strain might be generated (especially if crosslinking in the first photo polymerisation step was too intensive) which can destroy the UV-cured structure (cracks). The inherent and technology typical roughness of the relevant surfaces leads to even easier crack formation due to internal strain generation. The use of an inkjet composition according to the present invention provides a kind of "compromise" that does take all of these relevant different issues into consideration - especially: crosslinking has to be rigid enough to provide green body strength and keep the thermal curing system in place on the one hand but must not be too brittle in order to survive thermal curing on the other hand.

The special "crosslinking strategy" that justifies the advantages according to the present invention is reflected in the underlying "laws" of the inkjet composition, which is decisively justified by compliance with the following (key) parameters I), II) and III):
I) inkjet composition having 1.0 - 4.5 mol/kg acryloyl groups;
II) 25 - 50 mol % of the contained acryloyl groups are provided by the reactive compound (N);
III) molar ratio of contained acryloyl groups to contained epoxy groups of compound (D) is 0.3 to 1.5.

### (key) parameter I):

If the value is too high, a stronger tension is generated in the green body - later crack formation is favored - if the value is too low, the green body strength suffers: ultimately, among other things, a suitable compromise between providing strength, toughness and elasticity.

### (key) parameter II):

This parameter also provides a practical compromise solution between (green body) strength and elasticity. Too high a concentration of poly acrylates also causes a considerable increase in ink viscosity, so that printability by inkjet is made more difficult. On the other hand, the poly acrylates in particular are decisive for the formation of the network and thus for sufficient green body strength.

The mono acrylates contribute in particular to the toughness-compatibility balance of the matrix network of the IPN with regard to tension compensation during thermal post-curing and to the control of hard and soft phases as well as phase domains.

The right balance of green body strength and flexibility is ensured by adhering to parameter II): Too low a value causes insufficient green strength, whereby too high a value on the one hand usually causes viscosity problems, but in particular causes a disadvantageous distortion (distortion: serves the macroscopic/optical characterization of the curvature/bending of cast test specimens):
The distortion ("as a bend in "test specimens" - compared to a smooth surface") increases with increasing degree of crosslinking. In the injection process, such a distortion can occur practically per layer, which favors a later crack formation between the layers.

Curvature due to distortion might be also problematic because the next inkjet layer of ink drops should always be applied to a smooth surface (height control, dynamic effects).

### (Key) parameter III):

In the broadest sense, this parameter ensures a balanced ratio of stabilization by means of pre-hardening and post-curing - concerns, among other things, compromise between green body strength and strength of the final body.

With increasing degree of curing of the first network (pre-curing), stronger stress is generated in the green body during the formation of the second, thermal network (post-curing), which favors the formation of cracks (would be disadvantageously associated with too high a value). However, sufficient green body strength is essential (a value that is too low would ultimately be disadvantageous in this respect).

Parameter III) as a relative ratio is always to be seen in combination with parameter I), which ultimately determines the networking density of both networks.

A further provided effect concerning the use of an inkjet composition according to the present invention is that "bleeding" of the printed objects before and during thermal cure is avoided (especially during the removal of the support structure with an aqueous liquid and during the thermal curing): Liquid material leaking from the printed 3D objects may cause health problems to end users because the liquid resin may contain reactive chemicals.

According to a special embodiment to the invention the inkjet composition might be provided as a kit: corresponding kit-in-parts inkjet composition may comprise a combination of at least one photocurable compound and at least one thermocurable compound and a separate photoinitiator. The kit-in-parts inkjet composition might comprise a combination of at least one photocurable compound, at least one thermocurable compound and a photoinitiator and a separate curing catalyst. However, in most cases it is not necessary and not advantageous to provide such a kit (a kit might be avoided).

According to a preferred embodiment the inkjet composition according to the present invention has 1.3 - 4.0 mol/kg acryloyl groups. Typically, in the inkjet composition 28 - 45 mol % of the contained acryloyl groups are provided by the reactive compound (N). The appropriate (quantitative) combination of the said two features "contained mol/kg acryloyl groups" and "mol % of the contained acryloyl groups provided by the reactive compound (N)" is also important concerning the provision of a pre-product (and also of the final product) which is not too brittle (tendency to crack) on the one hand but also not too soft on the other hand.

According to a preferred embodiment in the inkjet composition 80 - 100 mol %, preferably 90 - 100 mol %, of the reactive compound (N) are provided by species containing not more than three acryloyl groups. However, it is important to regard this regularity in combination with the said other features "contained mol/kg acryloyl groups" and "mol % of the contained acryloyl groups provided by the reactive compound (N)" because the (right quantitative) combination of these features has been identified as to be a basic requirement concerning the provision of a working process on the one hand and the generation of a product of high quality on the other hand.

Mono acrylates (especially compound (M)) often contribute regarding a moderate viscosity of the inkjet composition (especially species having a moderate molecular weight). A higher amount of mono acrylates reduces the degree of crosslinking.

The following mono acrylates might be used:
Ethylacrylate, stearyl acrylate, tetrahydrofurfuryl acrylate, lauryl acrylate, 2-phenoxyethyl acrylate, isodecyl acrylate, isooctyl acrylate, tridecyl acrylate, caparolactone acrylate, ethoxylated nonyl phenol acrylate, isobornyl acrylate, hexadecyl acrylate, monomethoxy tripropylene glycol monoacrylate, monomethoxy neopentyl glycol propoxylate monoacrylate, B-carboxyethyl acrylate, and/or oxyethylated phenol acrylate.

According to a preferred embodiment the mono acrylate might be selected from dihydrodipentadienyl acrylate (CAS: 12542-30-2), cyclic trimethylolpropane formal acrylate (CAS: 66492-51-1), tricyclodecanemethanol acrylate (CAS: 93962-84-6), 2-phenylethyl acrylate (CAS: 3530-36-7), 2-hydroxy-3-phenoxypropylacrylat (CAS: 16969-10-1), 2-[(butylcarbamoyl)oxy]ethyl acrylate (63225-53-6) and/or 4-hydroxybutyl acrylate (2478-10-6).

However, the most preferred mono acrylate species are isobornyl acrylate, acryloyl morpholine, 2-[(butylcarbamoyl)oxy]ethyl acrylate or mixtures thereof.

The following di acrylates might be used: 1,3 butylene glycol diacrylate, 1,4 butanediol diacrylate, diethylene glycol diacrylate, 1,6 hexanediol diacrylate, neopentyl glycol diacrylate, polyethylene glycol diacrylate, tetraethylene glycol diacrylate, triethylene glycol diacrylate, dipropylene glycol diacrylate, tripopylene glycol diacrylate, polyethylene glycol diacrylate, ethoxylated bisphenol A diacrylate, propoxylated neopentyl glycol diacrylate, ethoxylated neopentyl glycol diacrylate, ethoxylated tripopylene glycol diacrylate and/or monomethoxy trimethylolpropane ethoxylate diacrylate.

The following tri acrylates might be used: trimethylol propane triacrylate, tris (2-hydroxy ethyl) isocyanurate triacrylate, ethoxylated trimethylol propane triacrylate, propoxylated glycerol triacrylate ditrimethylol propane triacrylate, pentaerythritol triacrylate, and/or propoxylated trimethylolpropane triacrylate.

However, preferred poly acrylates (especially as the photo polymerization reactive compound (N) containing at least two acryloyl groups) are trimethylolpropantriacrylat, tricyclodecane dimethanol diacrylate (CAS: 42594-17-2), polyethylene glycol diacrylate (CAS: 25322-68-3), polypropylene glycol diacrylate (CAS: 52496-08-9), polypropylene glycol) dimethacrylate (CAS: 25852-47-5), dipropylene glycol diacrylate (CAS: 57472-68-1), trimethylolpropane triacrylate (3290-92-4), bisphenol A glycerolate diacrylate (CAS: 4687-94-9), tris isocyanurate triacrylate (CAS: 40220-08-4), bisphenol A epoxy diacrylate (CAS: 55818-57-0) and/or trimethylolpropane tetraacrylate (CAS: 94108-97-1).

The photocurable compound(s) are comprised in the inkjet composition in mol amounts as specified above - that might be amounts of e.g. 20 to 50 wt.%, based on the total weight of the inkjet composition.

The photo polymerization reactive compound (species of (M) and (N)) and the radical photo initiator (R) may be comprised in the inkjet composition in a weight ratio of 95 : 5 to 99.5 : 0.5, preferably 97 : 3 to 99 : 1.

The photo initiator (R) generates reactive species (free radicals) when exposed to radiation (e.g. UV or visible light).

The photo initiator might be comprised in the inkjet composition in an amount of 0.2 to 4 wt.%, based on the total weight of the inkjet composition.

According to one embodiment species of the radical photoinitiator (R) are provided by phosphinoxide-based photoinitiators, preferably by diphenyl(2,4,6-trimethylbenzoyl)phosphine oxide and/or phenyl bis(2,4,6-trimethylbenzoyl)phosphine oxide.

The contained thermocurable compound is a compound which is able to e.g. thermal polymerize (e.g. cationic initiated polymerisation) and/or crosslink when exposed to heat. Preferably, the thermal curable compound should not polymerize and/or cross-link at temperatures below 100°C. According to the present invention the epoxy compound (D) containing at least two epoxy groups is provided as thermocurable compound.

Regarding the achieved quality (especially mechanical properties) it is important that there is an appropriate ratio in the inject composition regarding photo reactive groups (pre hardening according to the first step) on the one hand and thermal reactive groups (post hardening active) on the other hand. In this connection it is preferred that in the inkjet composition the molar ratio of contained acryloyl groups to contained epoxy groups of compound (D) is 0.4 to 1.3.

Epoxy compound (D) containing at least two epoxy groups is well known by a skilled person. Relevant species are known as poly epoxides. Preferred species are di epoxides.

It is typical to the invention that the curing mechanism is based on a (homo)polymerization or a (co)polymerisation of the epoxy compound (chain reaction which is initiated by a cationic or an anionic catalysator) and not based on a polyaddition (step reaction). Thus, it is preferred that species (according to one preferred embodiment all said species) of the epoxy compound (D) do not contain amino groups and no hydroxyl groups because these groups might provide non-desired thermal reactivity at temperatures below 100 °C (polyaddition reactions with epoxy groups).

Relevant species may comprise 3,4-epoxycyclohexylmethyl, 3, 4-epoxycyclohexanecarboxylate, diglycidyl ether of bisphenol A, trimethylol propane triglycidyl ether, PPG 400 diglycidyl ether, limonene dioxide, (3,4-epoxycyclohexyl)methyl methacrylate, 2-ethylhexyl glycidyl ether or any mixture thereof.

According to a special embodiment at least 10 wt.-% of the species of (D), preferably at least 30 wt.-% of the species of (D), are provided by di epoxides, preferably by 3,4-epoxycyclohexylmethyl 3,4-epoxycyclohexanecarboxylate.

The epoxy compound (D) containing at least two epoxy groups is comprised in the inkjet composition in an amount as defined above (indirectly defined: by means of the molar ratio of contained acryloyl groups to contained epoxy groups of compound (D)) which might be e.g. 35 to 70 wt.%, based on the total weight of the inkjet composition.

The inkjet composition preferably comprises a latent curing agent (working as an initiator or as a catalyst). According to a typical embodiment species of the epoxy curing initiator/catalyst (C) are provided by an ionic polymerisation initiator, which is preferably used as a latent curing agent.

The term latent curing agent is well known by a skilled person in the technical field. A latent curing agent is understood as an agent which does not react with the thermocurable compound, the epoxy compound, at room temperature (e.g. because being in a blocked form at room temperature), but reacts upon heating with the thermocurable compound (because the blocking group is removed), to effect curing.

The latent curing agent may be a super acid, such as trifluormethanesulfonic acid, fluorosurfuric acid, para-tuoluensoflonic acid, triflurooantimonate sulfonic acid, hexafluoroantimonate, tetrakis(pentafluorophenyl)borate, etc. A super acid is an acid with an acidity greater than that of 100% pure sulfuric acid, which has a Hammett acidity function (H₀) of -12. The latent curing agent may preferably selected from the group consisting of trifluoromethanesulfonic acid, preferably blocked trifluoromethanesulfonic acid, more preferably a quaternary ammonium blocked trifluoromethansulfonic acid. The latent curing agent may preferably selected from a blocked trifluoromethanesulfonic acid with a quaternary ammonium blocked trifluoromethane sulfonic acid (K-PURE^{®} TAG-2689 or K-PURE^{®} CXC-1614).

The latent curing agent may be comprised in the inkjet composition in an amount of 0.1 to 2 wt.%, preferably 0.5 to 1.5 wt.%, based on the total amount of the inkjet composition.

The used curing initiator/catalyst should be chosen wisely to start thermal reaction at a certain temperature which is much higher than the temperature during printing. This temperature should be not too high as the UV-system might not survive temperature above 220°C for long time. In the same time, they must be as low reactive as possible at printing conditions. They should work in a way that they can drive the thermal reaction to highest conversion. They should not destabilize the UV-system and they should survive a possible washing procedure to remove used support structures (as described below).

If the relevant manufacturing procedure should work well and a good product quality should be achieved it might be advantageous that species of the epoxy curing catalyst (C) are provided by blocked super acids, preferably such on the basis of trifluormethanesulfonic acid, fluorosurfuric acid, para-tuoluensoflonic acid, triflurooantimonate sulfonic acid, hexafluoroantimonate and/or tetrakis(pentafluorophenyl)borate.

According to a preferred embodiment 90 - 100 wt. %, preferably 97 - 100 wt. %, of the contained ingredients (in the inkjet composition) are provided by species of (M), (N), (R), (D) and (C).

The addition of other ingredients is possible but in many cases not advantageous (e.g. if there is no contribution concerning a curing effect or if non-desired thermal reactivity below 100 °C is caused): Generally, it is not preferred to use (higher amounts of) inert solvents (not able to photopolymerize in the first step or to post cure in the second step). Preferably, the inkjet composition contains less than 8 wt.%, more preferably less than 2 wt.%, solvents. Furthermore, it is not preferred to use (higher amounts of) radical polymerizable monomers not containing acryloyl groups (like meth acrylates). Preferably, the inkjet composition contains less than 6 wt.%, more preferably less than 2 wt.%, radical polymerizable monomers not containing acryloyl groups. For example, meth acrylates are on the one hand not reactive enough regarding the (short) radical photo polymerization. Preferably, the inkjet composition contains less than 6 wt.%, more preferably less than 2 wt.%, meth acrylates (not containing acryloyl groups). In order to avoid non-desired side reactions (typically increasing viscosity), it is preferred that the inkjet composition does not contain (high amounts of) amino and/or hydroxyl groups. Preferably, the inkjet composition contains less than 0.1 mol/kg amino groups and less than 0.2 mol/kg hydroxyl groups.

In any case it is preferred to avoid compounds (especially high amounts of them) which at temperatures below 100 °C react in the composition via one of the step reaction types: polyaddition, polycondensation. Such compounds (especially in higher amounts) might cause problems regarding the desired viscosity stability. It is essential to limit the viscosity of the inkjet composition in order to enable its jetting through a thin nozzle.

Typically, the inkjet composition has a viscosity of 10 - 40 mPa.s at 45°C, where the viscosity is measured on a thermally controlled rotational rheometer in cone-plate geometry (Anton Paar Physica MCR 300, cone diameter: 60 mm, zero-gap distance: 0,061 mm, cone angle: 0,5°, shear-rate 600s-1).

However, the inkjet composition according to the present invention additionally might contain stabilizers, wetting agents, radical polymerization inhibitor, defoamers and/or pigments. Normally, dissolved oxygen works as radical polymerization inhibitor but additionally synthetic inhibitors might be used.

The present invention also relates to a process for printing a three-dimensional object comprising the steps of:
(a) jetting the inkjet composition as described above by means of a printing machine to form a layer in a configured pattern corresponding to the shape of the object,
(b) irradiating the formed layer to form a photo-cured layer,
(c) sequentially repeating steps (a) and (b) to form a plurality of photo-cured layers in order to prepare a green body of the three-dimensional object and
(d) heating said green body to post cure the three-dimensional object.

Normally, additionally a support ink is printed and cured in order to stabilize the green body, where the cured support ink is water soluble and is removed after step c) and before the performance of step (d) by treating with an aqueous washing liquid.

Typically, step (d) is performed in such a way that temperatures between 110 and 140 °C are kept at least for 5 hours.

Normally, in the heating step (d) the relevant increase of the temperature is limited to 2 K/min.

Preferably, in step (b) the irradiation is performed by means of an UV lamp and the exposure time of each ink layer is 0.1 - 2 s.

A typical procedure might be as follows:
The inkjet composition may be filtered before using it as an inkjet composition. Preferably, the inkjet composition is filtered in a manner so that it does not comprise particles having a particle size of more than 1 µm. Then, the ink is loaded into the printer. The system recirculates for at least 2 hours, better more to assure homogeneity and constant temperature. During printing, the support ink (e.g. acryl amide based) is ink-jetted and UV-cured creating a mold for the object ink which is ink-jetted and UV-cured afterwards (wet on dry printing). To control layer thickness all inks are levelled in their liquid state once on the building tray which takes place after ink-jetting during the dynamic wetting process on the substrate and before UV-curing. In this manner the 3D-object is generated. The support ink is printed layer per layer (together with the layers of the green body) so that after the printing process the object (green body) is surrounded by support material (e.g. poly acryl amid). To remove the support material, the entire structure is placed in a water bath and heated to 35-40°C in the presence of ultrasound. Depending on support material and geometry of the object, the washing process takes 0.5 h - 24 h, sometimes even longer. Once all support structure is removed, the object is taken out of the water bath and dried at room temperature on air. After about 5 h drying, the object is placed in a heating chamber (kind of oven) where depending on the chemistry, geometry and application a well-adapted temperature program is chosen to heat-cure the thermal curing system present in the printed and now washed object. It is beneficial to slowly start the thermal reaction avoiding strong exothermic heat development and giving the UV-cured system time to relax. After the appropriate thermal curing it is of advantage to slowly cool down to avoid trapping of internal stresses.

The present invention also relates to a three-dimensional object manufactured according to the method as described above.

The three dimensional object may have a tensile strength of 21-40 MPa, preferably of 41-100 MPa and an elongation at break of 2.1 - 5 %, preferably of more than 5 % and an E-modulus of 100 - 1000 MPa, preferably of 1001-4500 MPa.

Additionally, the present invention is directed to the use of an inkjet composition as described above for manufacturing a three-dimensional object.

### General methods for measuring

Viscosity is measured on a thermally controlled rotational rheometer in cone-plate geometry (Anton Paar Physica MCR 300, cone diameter: 60 mm, zero-gap distance: 0,061 mm, cone angle: 0,5°, shear-rate 600s⁻¹) at temperatures from 40 to 60°C with a heating ramp of 2 K/min following the DIN EN ISO 3219. For comparison, the viscosity at 50 °C is shown in the following examples. Storage stability of inks was determined with the same experiment than described above after storing closed sample jars for 2, 4 and/or 7 days at 60 °C.

The Shore hardness A and D was measured following the DIN EN ISO norm 7619 by a OS-2 measuring device from Hildebrand Prüf- und Messtechnik GmbH with cylindrical specimens in diameter of 40 mm and thickness of 7 mm. The results were taken off the scale after 3 seconds of placing the needle on the specimen. The measurement was repeated 5 times.

The green body strength is measured by creating rectangular specimens with a dimension of 40 mm x 7 mm x 2 mm (b x a x c) of the respective formulation by UV-irradiation. This specimens were placed on two PTFE-blocks with a volume of 100 mm x 5 mm x 5 mm. The span width was 35 mm. The set-up was kept at room temperature and after 1,5 h the bending/deformation was checked. To quantify different formulations, a grading system was defined: A) means no (i.e. 0% bending) or almost no bending in the range of not more than 5%, not more than 3%, not more than 1% from the initial rectangular specimen was observed directly. The percentage in bending is defined in comparing the center position (e.g. dimension 20 mm x 3.5 mm x 1 mm (b x a x c)) of the rectangular specimen at the beginning of the set-up at time 0 and the center position of the rectangular specimen at the end of the set-up at time 1,5 h. B) means that the bending becomes more pronounced so that the specimen shows bending of more than 5% to 20%. C) means that the specimen shows bending of more than 20% to almost touching the ground. D) indicates that the specimen touches ground. The same was done after curing in the above-mentioned oven-cure program.

Tensile testing was performed on a Zwick-Roell tensile tester 1445 following the DIN EN ISO norm 527-1 with 5A specimen. E-Modulus was determined from the slope of the stress-strain curve at deformations from 0.05-0.25 % at 1 mm/min. Tensile strength and elongation at break were determined by pulling the specimen at 5 mm/min for rigid materials.

The heat deflection temperature B (0.45 MPa) as a three-point-bending test was performed on a HDT-measuring device Compact 3 from Coesfeld on specimens with dimensions of 80 x 10 x 4 mm according to DIN EN ISO 75. The heat rate was set to 2 K/min in a range from 30 °C until reaching the HDT-value.

The glass transition temperature as well as the network density were determined using a thermomechanical analysis (TMA) three-point-bending set-up from Mettler Toledo (TMA/SDTA2+ LN2) with specimen dimensions of 10 x 5 x 1,2 mm referring to DIN EN ISO 11359. The heat rate was 5 K/min in a range of 20-300 °C and the alternating load in sinus mode was set between 0.02 to 1.0 N. The network density was then calculated by the storage modulus 50 K above T_{g} divided by 3 as an empirical factor, the gas constant R and the temperature 50 K above T_{g} (in Kelvin).

The warpage of 5A-specimens from tensile testing after UV- and thermal curing in the above-mentioned oven-cure program was determined by checking the bending/deformation in a way that a grading system was defined: A) means no (i.e. 0% bending) or almost no bending in the range of not more than 5%, not more than 3%, not more than 1% from the initial specimen was observed. The percentage in bending is defined in comparing the center position of the specimen at the bottom plate to the outer jaws that might be lifted up from the bottom plate. B) means that the bending becomes more pronounced so that the specimen shows bending of more than 5% to 10%. C) means that the specimen shows bending between 10-20%. D) indicates that the specimens bending is more than 20%.

The molecular weight and polydispersity of synthesized polymer was measured on an Agilent GPC/SEC chromatograph equipped with a refractive index detector and two SDV (styrene-divinylbenzene copolymer) columns from PSS GmbH with 300 mm length, 8 mm inner diameter, a particle size of 5 µm and separation area of 1000Å and 100000Å each. The calibration was done with 15 polystyrene standards with Mp from 162 to 3080 K. A polynomial fit PSS Poly 3 was used. The sample was dissolved in THF 1g/l, the injection volume was 75 µL and the eluent was THF with a flow rate of 1 mL/min. Residual monomer content after polymerization was evaluated by HPLC experiments using the Agilent Technologies 1260 Infinity II.

The present invention is further described below by using examples.

### General Terms and Definitions

### Reactants as used in the examples

- Isobornylacrylate (IBOA)- CAS No 5888-33-5 from SARTOMER
- Acryloyl morpholine (ACMO) - CAS No 5117-12-4 from RAHN
- Trimethylolpropantriacrylat (TMPTA) - CAS No 15625-89-5 from SARTOMER
- CN981 - polyether ester urethane diacrylate - CAS No 72162-39-1 from SARTOMER
- Bisphenol A-glycerolate (1 glycerin/phenol) diacrylate (BisGA) - CAS No 4687-94-9 from SIGMA ALDRICH
- Omnirad 819 - photoinitiator with CAS No 162881-26-7 from IGM Resins
- Genorad 16 - polymerisation inhibitor being a combination of glycerol propoxylate (1PO/OH) and 4-methoxyphenol from RAHN
- BYK 333 - polyether modified polydimethylsiloxane additve from BYK
- 3,4-epoxycyclohexylmethyl 3,4-epoxycyclohexanecarboxylate (Cyclic aliphatic Epoxy, Uvacure1500) - CAS No 2386-87-0 from ALLNEX
- Diglycidyl ether of bisphenol A (DGEBA, EEW 182-192, Epilox 19-00) - CAS No 25068-38-6 from LEUNA
- Diglycidyl ether of bisphenol F (DGEBF, EEW 165-173, Epilox F17-00) - EINECS No 701-263-0 from LEUNA
- Propylene glycol diglycidyl ether 380 (PPG380DGE, Epilox P13-42) - CAS No 26142-30-3 from LEUNA
- Propylene glycol diglycidyl ether 640 (PPG640DGE, Epilox M985) - CAS No 26142-30-3 from LEUNA
- 1,6-Hexanediol diglycidyl ether (HDDGE) - CAS No 16096-31-4 from SYSKEM CHEMIE GMBH
- Trimethylolpropane triglycidyl ether (TMPTGE, Araldite DY-T/Ch) - CAS No 30499-70-8 from HUNTSMAN
- epoxidized fatty acid ester based of soy bean oil (4-5-5.0 EP Herwemag EPO44) - CAS No 95370-96-0 from HERWE GMBH
- Methyl methacrylate - CAS No 80-62-6 from ACROS ORGAN ICS
- Glycidyl methacrylate - CAS No 106-91-2 from SIGMA ALDRICH
- Isobornyl methacrylate (Visiomer Terra IBOMA) - CAS No 7534-94-3 from EVONIK
- polyTHF250 - CAS No 25190-06-1 from SIGMA ALDRICH
- K-PURE^{®} CXC1612 - latent curing agent from King Industries
- K-PURE^{®} CXC2689 - latent curing agent from King Industries
- Dimethyl-2,2'-azobisisobutyra (V601) - CAS No 38148-84-4 from WAKO

### Example 1:

Isobornylacrylate (IBOA) (28.95wt%), acryloyl morpholine (ACMO) (15.0wt%), trimethylpropane triacrylate (TMPTA) (15.0wt%), Omnirad 819 (0.6wt%), Genorad 16 (0.25wt%), BYK 333 (0.2wt%), 3,4-epoxycyclohexylmethyl 3,4-epoxycyclohexanecarboxylate (Cyclic aliphatic Epoxy) (20.0wt%), diglycidyl ether of bisphenol A (DGEBA) (19.2wt%) and K-PURE^{®} CXC1612 (0.8 wt%) were mixed and filtered over 1 µm.

The ink was inkjet UV printed and post-cured as follows: 30-130 °C at 1 K/min, 130 °C/10h, 130-160 °C at 1 K/min, 160°C/10h, 160-190°C at 1 K/min, 190 °C/4h, 190-30 °C at -5 K/min.

The final properties of the final object were:
Tensile strength: 66MPa
Elongation at break: 2.4%
E-Modulus: 3300 MPa.
HDT B: 121 °C

The viscosity stability of Example 1 is measured to be as following:

| **Formulation** | **Time [days] at 60°C** | **Viscosity at 50°C [mPa·s]** |
|---|---|---|
| Example 1 | 0 | 15 |
| | 2 | 18 |
| | 7 | 21 |

| **Example 1** | wt% in formulation | Mol of functionality (for 1 kg final formulation) | % of all UV-curing functionalities | % of all curing functionalities |
|---|---|---|---|---|
| Compound | | | | |
| IBOA | 28.95 | 1.39 | 35% | 21% |
| ACMO | 15.0 | 1.06 | 27% | 16% |
| TMPTA | 15.0 | 1.52 | 38% | 23% |
| Cyclic aliphatic Epoxy | 20.0 | 1.59 | | 24% |
| DGEBA | 19.2 | 1.13 | | 17% |

The said inkjet composition comprises:
I) mol/kg acryloyl groups of (M) and (N): 3.79
II) mol% of acryloyl groups provided by reactive compound (N): 38.2
III) molar ratio of contained acryloyl groups (M) and (N) to contained epoxy groups of compound (D): 1.46

### Example 2

Isobornylacrylate (15.3wt%), acryloyl morpholine (6.5wt%), trimethylpropane triacrylate (6.8wt%), Omnirad 819 (1.0wt%), Genorad 16 (0.25wt%), BYK 333 (0.2wt%), 3,4-epoxycyclohexylmethyl 3,4-epoxycyclohexanecarboxylate (55.3wt%), polypropylene glycol diglycidyl ether 380 (14.0wt%) and K-PURE^{®} CXC2689 (0.7wt%) were mixed and filtered over 1 µm.

The ink was inkjet UV printed and post-cured as follows: 30-100 °C at 1 K/min, 100 °C/1h, 100-130 °C at 1 K/min, 130°C/2h, 130-145 °C at 1 K/min, 145 °C/2h, 145-160 °C at 1 K/min, 160 °C/2h, 160-30 °C at -5 K/min.

The final properties of the final object were:
Tensile strength: 75 MPa
Elongation at break: 3.5%
E-Modulus: 3100 MPa.
HDT B: 148°C

The viscosity stability of the Example 2 is measured to be as following:

| **Formulation** | **Time [days] at 60°C** | **Viscosity at 50°C [mPa·s]** |
|---|---|---|
| Example 2 | 0 | 17 |
| | 2 | 19 |
| | 7 | 25 |

| **Example 2** | wt% in formulation | Mol of functionality (for 1 kg final formulation) | % of all UV-curing functionalities | % of all curing functionalities |
|---|---|---|---|---|
| Compound | | | | |
| IBOA | 15.3 | 0.73 | 39% | 10% |
| ACMO | 6.5 | 0.46 | 24% | 7% |
| TMPTA | 6.8 | 0.69 | 37% | 10% |
| Cyclic aliphatic Epoxy | 55.3 | 4.38 | | 63% |
| PPG380DGE | 14.0 | 0.74 | | 11% |

The said inkjet composition comprises:
I) mol/kg acryloyl groups of (M) and (N): 1.88
II) mol% of acryloyl groups provided by reactive compound (N): 36.6
III) molar ratio of contained acryloyl groups (M) and (N) to contained epoxy groups of compound (D): 0.37

### Example 3

Isobornylacrylate (13.3wt%), acryloyl morpholine (6.0wt%), trimethylpropane triacrylate (6.0wt%), CN981 (3.9wt%), Omnirad 819 (0.6wt%), Genorad 16 (0.25wt%), BYK 333 (0.2wt%), 3,4-epoxycyclohexylmethyl 3,4-epoxycyclohexanecarboxylate (69.2wt%) and K-PURE^{®} CXC2689 (0.56 wt%) were mixed and filtered over 1 µm.

The ink was inkjet UV printed and post-cured as follows: 30-100 °C at 1 K/min, 100 °C/1h, 100-130 °C at 1 K/min, 130 °C/2h, 130-145 °C at 1 K/min, 145 °C/2h, 145-160 °C at 1 K/min, 160 °C/2h, 160-30 °C at -5 K/min.

The final properties of the final object were:
Tensile strength: 86 MPa
Elongation at break: 3.5%
E-Modulus: 2400 MPa.
HDT B: 150°C

The viscosity stability of the Example 3 is measured to be as following:

| **Formulation** | **Time [days] at 60°C** | **Viscosity at 50°C [mPa·s]** |
|---|---|---|
| Example 3 | 0 | 28 |
| | 2 | 36 |
| | 7 | 53 |

| **Example 3** | wt% in formulation | Mol of functionality (for 1 kg final formulation) | % of all UV-curing functionalities | % of all curing functionalities |
|---|---|---|---|---|
| Compound | | | | |
| IBOA | 13.3 | 0.64 | 37% | 9% |
| ACMO | 6.0 | 0.43 | 25% | 6% |
| TMPTA | 6.0 | 0.61 | 35% | 8% |
| CN981 | 3.9 | 0.05 | 3% | 1% |
| Cyclic aliphatic Epoxy | 69.2 | 5.49 | | 76% |

The said inkjet composition comprises:
I) mol/kg acryloyl groups of (M) and (N): 1.71
II) mol% of acryloyl groups provided by reactive compound (N): 38.1
III) molar ratio of contained acryloyl groups (M) and (N) to contained epoxy groups of compound (D): 0.31

### Example 4

### Synthesis of Polymer-mixture 1: Polymer 1 in 45 wt% HDDGE

The reactive solvent 1,6-Hexanediol diglycidyl ether (620,16 g; 41,4 wt%) is placed into a reaction vessel under nitrogen atmosphere and heated to 90°C. Monomers: methylmethacrylate (190,56 g; 1.90 mol; 0,35 eq.), glycidyl methacrylate (270,60 g; 1.90 mol; 0,35 eq.), isobornyl methacrylate (362,73 g; 1.63 mol; 0,30 eq.), and initiator dimethyl-2,2'-azobisisobutyra (V601, 56,36 g; 0,24 mol; 0,045 eq.) were mixed together under nitrogen atmosphere and metered in the reaction vessel over a period of 120 min. After the metering, the reaction was continued for 120 min and V601 (12,52 g; 0,054 mol; 0,01 eq.) diluted in reactive solvent 1,6-Hexanediol diglycidyl ether (53,93 g; 3,6 wt%) under nitrogen atmosphere was dropwise added in the reaction vessel over 20 min. The reaction is continued for 120 min more and the reaction temperature is then increased to 100 °C. 60 min later, the reaction is stopped, and the mixture is further used without any purification for the formulation step. The molecular weight of the synthesized polymer 1 in HDDGE matrix was measured by GPC using polystyrene standard and THF as solvent. Mn: 11100 and the PDI: 1,61. The monomer rest < 1% was evaluated using HPLC.

Isobornylacrylate (29.0wt%), acryloyl morpholine (15.0wt%), trimethylpropane triacrylate (15.0wt%), Omnirad 819 (0.6wt%), Genorad 16 (0.25wt%), BYK 333 (0.2wt%), 3,4-epoxycyclohexylmethyl 3,4-epoxycyclohexanecarboxylate (23.8wt%), polymer-mixture 1 (15.9wt%) and K-PURE^{®} CXC2689 (0.3 wt%) were mixed and filtered over 1 µm.

The ink was inkjet UV printed and post-cured as follows: 30-130 °C at 1 K/min, 130 °C/4h, 130-150 °C at 1 K/min, 150 °C/10h, 150-180 °C at 1 K/min, 180 °C/10h, 180-30 °C at -5 K/min.

The final properties of the final object were:
Tensile strength: 82 MPa
Elongation at break: 3.7%
E-Modulus: 2800 MPa.
HDT B: 119°C

The viscosity stability of the Example 4 is measured to be as following:

| **Formulation** | **Time [days] at 60°C** | **Viscosity at 50°C [mPa·s]** |
|---|---|---|
| Example 4 | 0 | 28 |
| | 7 | 29 |

| **Example 4** | wt% in formulation | Mol of functionality (for 1 kg final formulation) | % of all UV-curing functionalities | % of all curing functionalities |
|---|---|---|---|---|
| Compound | | | | |
| IBOA | 29.0 | 1.39 | 35% | 21% |
| ACMO | 15.0 | 1.06 | 27% | 16% |
| TMPTA | 15.0 | 1.52 | 38% | 23% |
| Cyclic aliphatic Epoxy | 23.8 | 1.89 | | 28% |
| Polymer1 | 8.7 | 0.20 | | 3% |
| HDDGE | 7.1 | 0.62 | | 9% |

The said inkjet composition comprises:
I) mol/kg acryloyl groups of (M) and (N): 3.97
II) mol% of acryloyl groups provided by reactive compound (N): 38.2
III) molar ratio of contained acryloyl groups (M) and (N) to contained epoxy groups of compound (D): 1.47

### Example 5-10

To screen ink and material properties of potential inkjet formulations molded specimens are cured for 30 s from each side in translucent silicon molds from the bottom at a distance of 15 cm by UV-light (LED 395 nm, 16 W/cm²). Then a thermal post-curing is carried out. Testing results of this photopolymerized and oven-cured bulk specimens are then emphasizing in a good proximity the final material performance of material jetted and post-cured formulations, even though the preparation process in the first curing-step of the interpenetrating system differs.

Example 5-10 illustrate a varying formulation ratio in a way that the degree of functional acrylate groups by (N) are within the limits of claimed dual-curing inkjet inks or beyond the bounds to highlight the correlation of printing application and material characteristics.

Isobornylacrylate, acryloyl morpholine, trimethylpropane triacrylate, Omnirad 819 , Genorad 16, 3,4-epoxycyclohexylmethyl 3,4-epoxycyclohexanecarboxylate and K-PURE^{®} CXC2689 were mixed in ratios as shown in Table .

The ink was molded as described above and post-cured as follows: 30-100 °C at 1 K/min, 100 °C/1h, 100-130 °C at 1 K/min, 130°C/2h, 130-145 °C at 1 K/min, 145 °C/2h, 145-160 °C at 1 K/min, 160 °C/2h, 160-30 °C at -5 K/min.

As shown in Table the ink and material properties vary with increasing network density due to the increase of mol% by (N). Thus, the green body strength with labelling C or D is too low and the material in green state too soft, whereas a warpage of category C or D is too high and the material has too much internal tension to print and post-cure complex three dimensional objects in a sufficient dimensional accuracy with regard to the digital file. Additionally, good final mechanical properties in terms of toughness and flexibility, of preferably 60-100 MPa tensile strength and preferably 3-5% elongation at break are only achieved by balancing out the degree of functional acrylate groups by (N).

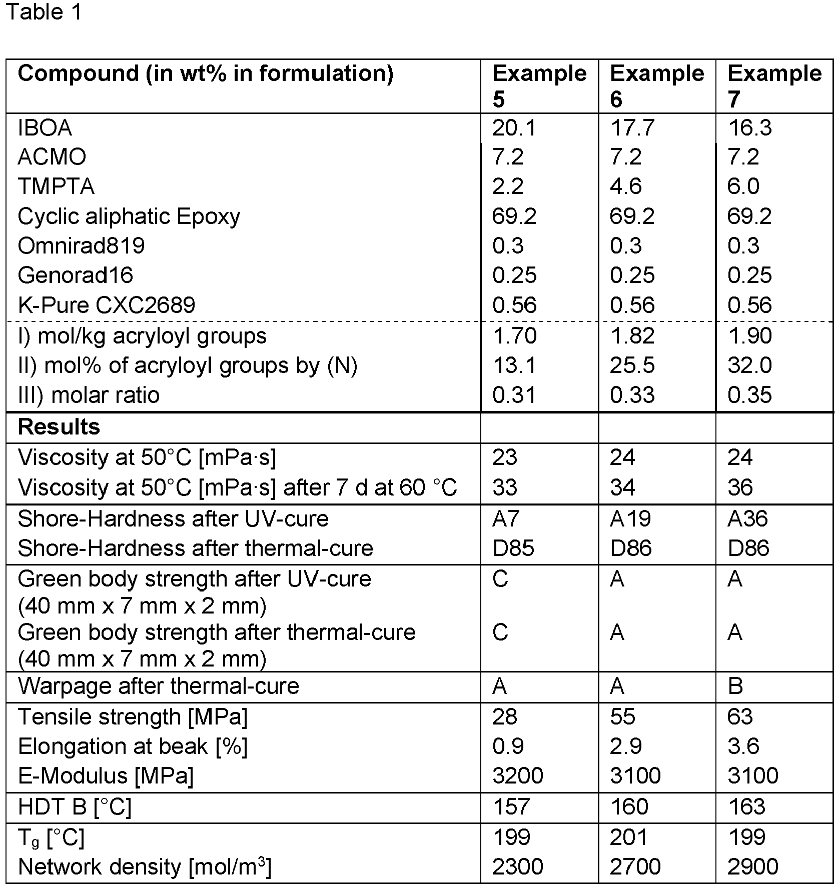

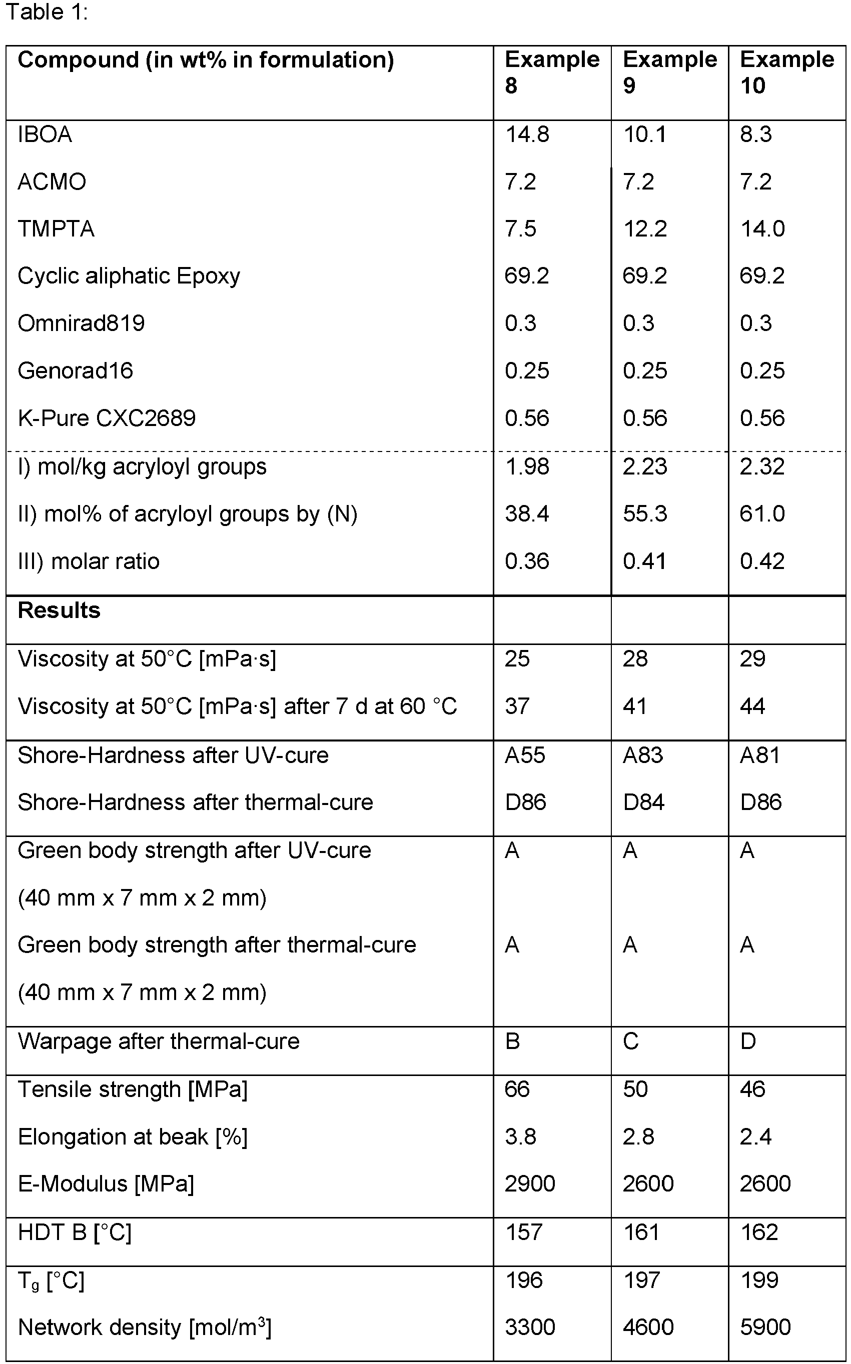

### Example 11

Isobornylacrylate (26.1wt%), acryloyl morpholine (12.3wt%), trimethylpropane triacrylate (11.3wt%), Omnirad 819 (0.15wt%), Genorad 16 (0.1wt%), 3,4-epoxycyclohexylmethyl 3,4-epoxycyclohexanecarboxylate (39.0wt%), polypropylene glycol diglycidyl ether 640 (10.0wt%) and K-PURE^{®} CXC2689 (1.0wt%) were mixed.

The ink was molded as described above and post-cured as follows: 30-100 °C at 1 K/min, 100 °C/1h, 100-130 °C at 1 K/min, 130°C/2h, 130-145 °C at 1 K/min, 145 °C/2h, 145-160 °C at 1 K/min, 160 °C/2h, 160-30 °C at -5 K/min.

The final properties of the final object were:
Tensile strength: 62 MPa
Elongation at break: 3.0%
E-Modulus: 3000 MPa.
HDT B: 117°C

The viscosity stability of the Example 11 is measured to be as following:

| **Formulation** | **Time [days] at 60°C** | **Viscosity at 50°C [mPa·s]** |
|---|---|---|
| Example 11 | 0 | 12 |
| | 7 | 19 |

| **Example 11** | wt% in formulation | Mol of functionality (for 1 kg final formulation) | % of all UV-curing functionalities | % of all curing functionalities |
|---|---|---|---|---|
| Compound | | | | |
| IBOA | 26.1 | 1.25 | 38% | 19% |
| ACMO | 12.3 | 0.87 | 27% | 13% |
| TMPTA | 11.3 | 1.14 | 35% | 17% |
| Cyclic aliphatic Epoxy | 39.0 | 3.09 | | 46% |
| PPG640DGE | 10.0 | 0.31 | | 5% |

The said inkjet composition comprises:
I) mol/kg acryloyl groups of (M) and (N): 3.26
II) mol% of acryloyl groups provided by reactive compound (N): 34.9
III) molar ratio of contained acryloyl groups (M) and (N) to contained epoxy groups of compound (D): 0.96

### Example 12

Isobornylacrylate (26.1wt%), acryloyl morpholine (12.3wt%), trimethylpropane triacrylate (11.3wt%), Omnirad 819 (0.15wt%), Genorad 16 (0.1wt%), 3,4-epoxycyclohexylmethyl 3,4-epoxycyclohexanecarboxylate (39.0wt%), trimethylolpropane triglycidyl ether (10.0wt%) and K-PURE^{®} CXC2689 (1.0wt%) were mixed.

The ink was molded as described above and post-cured as follows: 30-100 °C at 1 K/min, 100 °C/1h, 100-130 °C at 1 K/min, 130°C/2h, 130-145 °C at 1 K/min, 145 °C/2h, 145-160 °C at 1 K/min, 160 °C/2h, 160-30 °C at -5 K/min.

The final properties of the final object were:
Tensile strength: 54 MPa
Elongation at break: 2.3%
E-Modulus: 3100 MPa.
HDT B: 148°C

The viscosity stability of the Example 12 is measured to be as following:

| **Formulation** | **Time [days] at 60°C** | **Viscosity at 50°C [mPa·s]** |
|---|---|---|
| Example 12 | 0 | 13 |
| | 7 | 18 |

| **Example 12** | wt% in formulation | Mol of functionality (for 1 kg final formulation) | % of all UV-curing functionalities | % of all curing functionalities |
|---|---|---|---|---|
| Compound | | | | |
| IBOA | 26.1 | 1.25 | 38% | 17% |
| ACMO | 12.3 | 0.87 | 27% | 12% |
| TMPTA | 11.3 | 1.14 | 35% | 16% |
| Cyclic aliphatic Epoxy | 39.0 | 3.09 | | 42% |
| TMPTGE | 10.0 | 0.99 | | 14% |

The said inkjet composition comprises:
I) mol/kg acryloyl groups of (M) and (N): 3.26
II) mol% of acryloyl groups provided by reactive compound (N): 34.9
III) molar ratio of contained acryloyl groups (M) and (N) to contained epoxy groups of compound (D): 0.80

### Example 13

Isobornylacrylate (26.1wt%), acryloyl morpholine (12.3wt%), trimethylpropane triacrylate (11.3wt%), Omnirad 819 (0.15wt%), Genorad 16 (0.1wt%), 3,4-epoxycyclohexylmethyl 3,4-epoxycyclohexanecarboxylate (39.0wt%), epoxidized fatty acid ester based on soy bean oil (10.0wt%) and K-PURE^{®} CXC2689 (1.0wt%) were mixed.

The ink was molded as described above and post-cured as follows: 30-100 °C at 1 K/min, 100 °C/1h, 100-130 °C at 1 K/min, 130°C/2h, 130-145 °C at 1 K/min, 145 °C/2h, 145-160 °C at 1 K/min, 160 °C/2h, 160-30 °C at -5 K/min.

The final properties of the final object were:
Tensile strength: 57 MPa
Elongation at break: 3.2%
E-Modulus: 2800 MPa.
HDT B: 150°C

The viscosity stability of the Example 13 is measured to be as following:

| **Formulation** | **Time [days] at 60°C** | **Viscosity at 50°C [mPa·s]** |
|---|---|---|
| Example 13 | 0 | 17 |
| | 7 | 19 |

| **Example 13** | wt% in formulation | Mol of functionality (for 1 kg final formulation) | % of all UV-curing functionalities | % of all curing functionalities |
|---|---|---|---|---|
| Compound | | | | |
| IBOA | 26.1 | 1.25 | 38% | 18% |
| ACMO | 12.3 | 0.87 | 27% | 13% |
| TMPTA | 11.3 | 1.14 | 35% | 17% |
| Cyclic aliphatic Epoxy | 39.0 | 3.09 | | 46% |
| Epox. Soy bean oil | 10.0 | 0.43 | | 6% |

The said inkjet composition comprises:
I) mol/kg acryloyl groups of (M) and (N): 3.26
II) mol% of acryloyl groups provided by reactive compound (N): 34.9
III) molar ratio of contained acryloyl groups (M) and (N) to contained epoxy groups of compound (D): 0.92

### Example 14

Isobornylacrylate (31.3wt%), acryloyl morpholine (14.7wt%), trimethylpropane triacrylate (13.5wt%), Omnirad 819 (0.18wt%), Genorad 16 (0.12wt%), 3,4-epoxycyclohexylmethyl 3,4-epoxycyclohexanecarboxylate (20.0wt%), diglycidyl ether of bisphenol F (19.2wt%) and K-PURE^{®} CXC1612 (0.8wt%) were mixed.

The ink was molded as described above and post-cured as follows: 30-130 °C at 1 K/min, 130 °C/10h, 130-160 °C at 1 K/min, 160 °C/10h, 160-190 °C at 1 K/min, 190 °C/4h, 190-30 °C at -5 K/min.

The final properties of the final object were:
Tensile strength: 36 MPa
Elongation at break: 1.7%
E-Modulus: 2400 MPa.
HDT B: 96°C

The viscosity stability of the Example 14 is measured to be as following:

| **Formulation** | **Time [days] at 60°C** | **Viscosity at 50°C [mPa·s]** |
|---|---|---|
| Example 14 | 0 | 13 |
| | 7 | 17 |

| **Example 14** | wt% in formulation | Mol of functionality (for 1 kg final formulation) | % of all UV-curing functionalities | % of all curing functionalities |
|---|---|---|---|---|
| Compound | | | | |
| IBOA | 31.3 | 1.50 | 38% | 22% |
| ACMO | 14.7 | 1.04 | 27% | 15% |
| TMPTA | 13.5 | 1.37 | 35% | 20% |
| Cyclic aliphatic Epoxy | 20.0 | 1.59 | | 24% |
| DGEBF | 19.2 | 1.22 | | 18% |

The said inkjet composition comprises:
I) mol/kg acryloyl groups of (M) and (N): 3.91
II) mol% of acryloyl groups provided by reactive compound (N): 34.9
III) molar ratio of contained acryloyl groups (M) and (N) to contained epoxy groups of compound (D): 1.39

### Example 15

Isobornylacrylate (20.9wt%), acryloyl morpholine (9.8wt%), trimethylpropane triacrylate (9.0wt%), bisphenol A-glycerolate diacrylate (10.0wt%), Omnirad 819 (0.12wt%), Genorad 16 (0.1wt%), 3,4-epoxycyclohexylmethyl 3,4-epoxycyclohexanecarboxylate (49.5wt%) and K-PURE^{®} CXC2689 (0.5wt%) were mixed.

The ink was molded as described above and post-cured as follows: 30-100 °C at 1 K/min, 100 °C/1h, 100-130 °C at 1 K/min, 130 °C/2h, 130-145 °C at 1 K/min, 145 °C/2h, 145-160 °C at 1 K/min, 160 °C/2h, 160-30 °C at -5 K/min.

The final properties of the final object were:
Tensile strength: 57 MPa
Elongation at break: 2.0%
E-Modulus: 3500 MPa.
HDT B: 162°C

The viscosity stability of the Example 15 is measured to be as following:

| **Formulation** | **Time [days] at 60°C** | **Viscosity at 50°C [mPa·s]** |
|---|---|---|
| Example 15 | 0 | 23 |
| | 4 | 26 |

| **Example 15** | wt% in formulation | Mol of functionality (for 1 kg final formulation) | % of all UV-curing functionalities | % of all curing functionalities |
|---|---|---|---|---|
| Compound | | | | |
| IBOA | 20.9 | 1.00 | 33% | 14% |
| ACMO | 9.8 | 0.69 | 23% | 10% |
| TMPTA | 9.0 | 0.91 | 30% | 13% |
| BisGA | 10.0 | 0.41 | 14% | 6% |
| Cyclic aliphatic Epoxy | 49.5 | 3.92 | | 57% |

The said inkjet composition comprises:
I) mol/kg acryloyl groups of (M) and (N): 3.02
II) mol% of acryloyl groups provided by reactive compound (N): 43.8
III) molar ratio of contained acryloyl groups (M) and (N) to contained epoxy groups of compound (D): 0.77

### Example 16

Isobornylacrylate (26.1wt%), acryloyl morpholine (12.3wt%), trimethylpropane triacrylate (11.3wt%), Omnirad 819 (0.15wt%), Genorad 16 (0.1wt%), 3,4-epoxycyclohexylmethyl 3,4-epoxycyclohexanecarboxylate (27.6wt%), polyTHF250 (21.9wt%) and K-PURE^{®} CXC2689 (0.5wt%) were mixed.

The ink was molded as described above and post-cured as follows: 30-100 °C at 1 K/min, 100 °C/1h, 100-130 °C at 1 K/min, 130°C/2h, 130-145 °C at 1 K/min, 145 °C/2h, 145-160 °C at 1 K/min, 160 °C/2h, 160-30 °C at -5 K/min.

The final properties of the final object were:
Tensile strength: 28 MPa
Elongation at break: 14.0%
E-Modulus: 1000 MPa.
HDT B: 85°C

The viscosity stability of the Example 16 is measured to be as following:

| **Formulation** | **Time [days] at 60°C** | **Viscosity at 50°C [mPa·s]** |
|---|---|---|
| Example 16 | 0 | 4 |
| | 7 | 15 |

| **Example 16** | wt% in formulation | Mol of functionality (for 1 kg final formulation) | % of all UV-curing functionalities | % of all curing functionalities |
|---|---|---|---|---|
| Compound | | | | |
| IBOA | 26.1 | 1.25 | 38% | 17% |
| ACMO | 12.3 | 0.86 | 27% | 12% |
| TM PTA | 11.3 | 1.14 | 35% | 16% |
| Cyclic aliphatic Epoxy | 27.6 | 2.19 | | 30% |
| polyTHF250 | 21.9 | 1.75 | | 24% |

The said inkjet composition comprises:
I) mol/kg acryloyl groups of (M) and (N): 3.26
II) mol% of acryloyl groups provided by reactive compound (N): 34.9
III) molar ratio of contained acryloyl groups (M) and (N) to contained epoxy groups of compound (D): 1.49

## Claims

1. An inkjet composition having 1.0 - 4.5 mol/kg acryloyl groups comprising:
i) photo polymerization reactive compound (M) containing exactly one acryloyl group,
ii) photo polymerization reactive compound (N) containing at least two acryloyl groups,
iii) radical photoinitiator (R),
iv) epoxy compound (D) containing at least two epoxy groups and
v) epoxy curing initiator/catalyst (C), wherein
(M) is different from (D) with the proviso that epoxy compound containing exactly one acryloyl group and additionally containing at least two epoxy groups should be subsumed to (D)
and (N) is different from (D) with the proviso that epoxy compound containing at least two acryloyl groups and additionally containing at least two epoxy groups should be subsumed to (D),
25 - 50 mol % of the contained acryloyl groups are provided by the reactive compound (N) and the molar ratio of contained acryloyl groups to contained epoxy groups of compound (D) is 0.3 to 1.5.

2. An inkjet composition according to claim 1 having 1.3 - 4.0 mol/kg acryloyl groups.

3. An inkjet composition according to claim 1 or 2 in which 28 - 45 mol % of the contained acryloyl groups are provided by the reactive compound (N).

4. An inkjet composition according to one of the claims 1-3, where 80 - 100 mol %, preferably 90 - 100 mol %, of the reactive compound (N) are provided by species containing not more than three acryloyl groups.

5. An inkjet composition according to one of the claims 1-4, where the molar ratio of contained acryloyl groups to contained epoxy groups of compound (D) is 0.4 to 1.3.

6. An inkjet composition according to one of the claims 1 to 5, in which at least 10 wt.-% of the species of (D), preferably at least 30 wt.-% of the species of (D), are provided by di epoxides, preferably by 3,4-epoxycyclohexylmethyl 3,4-epoxycyclohexanecarboxylate.

7. An inkjet composition according to one of the claims 1 to 6, where species of the radical photoinitiator (R) are provided by phosphine oxide based photo initiators, preferably by diphenyl(2,4,6-trimethylbenzoyl)phosphine oxide and/or phenylbis(2,4,6-trimethylbenzoyl)phosphine oxide.

8. An inkjet composition according to one of the claims 1 to 7, where species of the epoxy curing initiator/catalyst (C) are provided by blocked super acids, preferably such on the basis of trifluormethanesulfonic acid, fluorosurfuric acid, para-tuoluensoflonic acid, triflurooantimonate sulfonic acid, hexafluoroantimonate and/or tetrakis(pentafluorophenyl)borate.

9. An inkjet composition according to one of the claims 1 to 8 in which 90 - 100 wt. %, preferably 97 - 100 wt. %, of the contained ingredients are provided by species of (M), (N), (R), (D) and (C).

10. An inkjet composition according to one of the claims 1 to 8 having a viscosity of 10 - 40 mPa s at 45°C, where the viscosity is measured on a thermally controlled rotational rheometer in cone-plate geometry, cone diameter: 60 mm, zero-gap distance: 0,061 mm, cone angle: 0,5°, shear-rate 600s-1, at temperatures from 40 to 60°C with a heating ramp of 2 K/min following the DIN EN ISO 3219.

11. An inkjet composition according to one of the claims 1 to 9, in which species of the epoxy curing initiator/catalyst (C) are provided by an ionic polymerisation initiator, which is preferably used as a latent curing agent.

12. An inkjet composition according to one of the claims 1 to 11, additionally containing stabilizers, wetting agents, radical polymerization inhibitor, defoamers and/or pigments.

13. A process for printing a three dimensional object comprising the steps of:
(a) jetting the inkjet composition according to one of the claims 1 - 12 by means of a printing machine to form a layer in a configured pattern corresponding to the shape of the object,
(b) irradiating the formed layer to form a photo-cured layer,
(c) sequentially repeating steps (a) and (b) to form a plurality of photo-cured layers in order to prepare a green body of the three dimensional object and
(d) heating said green body to post cure the three-dimensional object.

14. A process according to claim 13, in which additionally a support ink is printed and cured in order to stabilize the green body, where the cured support ink is water soluble and is removed after step c) and before the performance of step (d) by treating with an aqueous washing liquid.

15. A process according to one of the claims 13 or 14 in which step (d) is performed in such a way that temperatures between 110 and 140 °C are kept at least for 5 hours.

16. A process according to claim 15, where in the heating step (d) the relevant increase of the temperature is limited to 2 K/min.

17. A process according to one of the claims 13 - 16 in which in step (b) the irradiation is performed by means of an UV lamp and the exposure time of the ink layer is 0.1 - 2 s.

18. A three-dimensional object manufactured according to the method according to one of the claims 13 to 17.

19. Use of an inkjet composition according to one of the claims 1 to 12 for manufacturing a three-dimensional object.

## Patentansprüche

1. Tintenstrahlzusammensetzung mit 1,0-4,5 mol/kg Acryloylgruppen, umfassend:
i) eine photopolymerisationsreaktive Verbindung (M) mit genau einer Acryloylgruppe,
ii) eine photopolymerisationsreaktive Verbindung (N) mit mindestens zwei Acryloylgruppen,
iii) einen Radikalphotoinitiator (R),
iv) eine Epoxidverbindung (D) mit mindestens zwei Epoxidgruppen und
v) Epoxidhärtungsinitiator/-katalysator (C), wobei
(M) von (D) verschieden ist, mit der Maßgabe, dass die Epoxidverbindung mit genau einer Acryloylgruppe und zusätzlich mit mindestens zwei Epoxidgruppen zu (D) zu zählen ist,
und (N) von (D) verschieden ist, mit der Maßgabe, dass die Epoxidverbindung mit mindestens zwei Acryloylgruppen und zusätzlich mit mindestens zwei Epoxidgruppen zu (D) zu zählen ist,
25-50 Mol-% der enthaltenen Acryloylgruppen durch die reaktive Verbindung (N) bereitgestellt werden und das Molverhältnis von enthaltenen Acryloylgruppen zu enthaltenen Epoxidgruppen von Verbindung (D) 0,3 bis 1,5 beträgt.

2. Tintenstrahlzusammensetzung nach Anspruch 1 mit 1,3-4,0 mol/kg Acryloylgruppen.

3. Tintenstrahlzusammensetzung nach Anspruch 1 oder 2, in der 28 bis 45 Mol-% der enthaltenen Acryloylgruppen durch die reaktive Verbindung (N) bereitgestellt werden.

4. Tintenstrahlzusammensetzung nach einem der Ansprüche 1-3, wobei 80-100 Mol-%, vorzugsweise 90-100 Mol-%, der reaktiven Verbindung (N) durch Spezies mit nicht mehr als drei Acryloylgruppen bereitgestellt werden.

5. Tintenstrahlzusammensetzung nach einem der Ansprüche 1-4, wobei das Molverhältnis von enthaltenen Acryloylgruppen zu enthaltenen Epoxidgruppen von Verbindung (D) 0,4 bis 1,3 beträgt.

6. Tintenstrahlzusammensetzung nach einem der Ansprüche 1 bis 5, in der mindestens 10 Gew.-% der Spezies von (D), vorzugsweise mindestens 30 Gew.-% der Spezies von (D), durch Diepoxide, vorzugsweise durch 3,4-Epoxycyclohexancarbonsäure-3,4-epoxy-cyclohexylmethylester, bereitgestellt werden.

7. Tintenstrahlzusammensetzung nach einem der Ansprüche 1 bis 6, wobei Spezies des Radikalphotoinitiators (R) durch Photoinitiatoren auf Phosphinoxid-Basis, vorzugsweise durch Diphenyl-(2,4,6-trimethylbenzoyl)phosphinoxid und/oder Phenylbis(2,4,6-trimethylbenzoyl)phosphinoxid, bereitgestellt werden.

8. Tintenstrahlzusammensetzung nach einem der Ansprüche 1 bis 7, wobei Spezies des Epoxidhärtungsinitiators/-katalysators (C) durch blockierte Supersäuren, vorzugsweise solche auf der Basis von Trifluormethansulfonsäure, Fluoroschwefelsäure, para-Toluolsulfonsäure, Trifluoroantimonatsulfonsäure, Hexafluoroantimonat und/oder Tetrakis(pentafluorphenyl)borat, bereitgestellt werden.

9. Tintenstrahlzusammensetzung nach einem der Ansprüche 1 bis 8, in der 90-100 Gew.-%, vorzugsweise 97-100 Gew.-%, der enthaltenen Inhaltsstoffe durch Spezies von (M), (N), (R), (D) und (C) bereitgestellt werden.

10. Tintenstrahlzusammensetzung nach einem der Ansprüche 1 bis 8 mit einer Viskosität von 10-40 mPa s bei 45 °C, wobei die Viskosität auf einem temperierten Rotationsrheometer in Kegel-Platte-Geometrie, Kegeldurchmesser: 60 mm, Nullspaltabstand: 0,061 mm, Kegelwinkel: 0,5°, Scherrate 600 s⁻¹, bei Temperaturen von 40 bis 60°C mit einer Aufheizrate von 2 K/min gemäß DIN EN ISO 3219 gemessen wird.

11. Tintenstrahlzusammensetzung nach einem der Ansprüche 1 bis 9, in der Spezies des Epoxidhärtungsinitiators/-katalysators (C) durch einen ionischen Polymerisationsinitiator bereitgestellt werden, der vorzugsweise als latentes Härtungsmittel verwendet wird.

12. Tintenstrahlzusammensetzung nach einem der Ansprüche 1 bis 11, die zusätzlich Stabilisatoren, Netzmittel, Radikalpolymerisationsinhibitor, Entschäumer und/oder Pigmente enthält.

13. Verfahren zum Drucken eines dreidimensionalen Objekts, das folgende Schritte umfasst:
(a) Ausstoßen der Tintenstrahlzusammensetzung nach einem der Ansprüche 1-12 mit Hilfe einer Druckmaschine zur Bildung einer Schicht in einem konfigurierten Muster, das der Gestalt des Objekts entspricht,
(b) Bestrahlen der gebildeten Schicht zur Bildung einer photogehärteten Schicht,
(c) aufeinanderfolgendes Wiederholen der Schritte (a) und (b) zur Bildung einer Vielzahl von photogehärteten Schichten zur Herstellung eines Grünkörpers des dreidimensionalen Objekts und
(d) Erhitzen des Grünkörpers zum Nachhärten des dreidimensionalen Objekts.

14. Verfahren nach Anspruch 13, bei dem zusätzlich eine Trägertinte verdruckt und gehärtet wird, um den Grünkörper zu stabilisieren, wobei die gehärtete Trägertinte wasserlöslich ist und nach Schritt c) und vor der Durchführung von Schritt (d) durch Behandeln mit einer wässrigen Waschflüssigkeit entfernt wird.

15. Verfahren nach Anspruch 13 oder 14, bei dem Schritt (b) so durchgeführt wird, dass Temperaturen zwischen 110 und 140°C über einen Zeitraum von mindestens 5 Stunden gehalten werden.

16. Verfahren nach Anspruch 15, wobei im Erhitzungsschritt (d) die entsprechende Temperaturerhöhung auf 2 K/min beschränkt wird.

17. Verfahren nach einem der Ansprüche 13-16, bei dem in Schritt (b) die Bestrahlung mit Hilfe einer UV-Lampe durchgeführt wird und die Expositionszeit der Tintenschicht 0,1-2 s beträgt.

18. Dreidimensionales Objekt, hergestellt gemäß dem Verfahren nach einem der Ansprüche 13 bis 17.

19. Verwendung einer Tintenstrahlzusammensetzung nach einem der Ansprüche 1 bis 12 zur Herstellung eines dreidimensionalen Objekts.

## Revendications

1. Composition pour jet d'encre possédant 1,0 à 4,5 mole/kg de groupes acryloyle comprenant :
i) un composé (M) réactif en photopolymérisation contenant exactement un groupe acryloyle,
ii) un composé (N) réactif en photopolymérisation contenant au moins deux groupes acryloyle,
iii) un photoinitiateur de radicaux (R),
iv) un composé époxy (D) contenant au moins deux groupes époxy et
v) un initiateur/catalyseur de durcissement d'époxy (C),
(M) étant différent de (D) à la condition qu'un composé époxy contenant exactement un groupe acryloyle et de plus contenant au moins deux groupes époxy devrait être compris dans (D)
et (N) étant différent de (D) à la condition qu'un composé époxy contenant au moins deux groupes acryloyle et de plus contenant au moins deux groupes époxy devrait être compris dans (D),
25 à 50 % en moles des groupes acryloyle contenus étant fournis par le composé réactif (N) et le rapport molaire de groupes acryloyle contenus sur groupes époxy contenus du composé (D) étant de 0,3 à 1,5.

2. Composition pour jet d'encre selon la revendication 1 possédant 1,3 à 4,0 mole/kg de groupes acryloyle.

3. Composition pour jet d'encre selon la revendication 1 ou 2 dans laquelle 28 à 45 % en moles des groupes acryloyle contenus sont fournis par le composé réactif (N).

4. Composition pour jet d'encre selon l'une des revendications 1 à 3, où 80 à 100 % en moles, préférablement 90 à 100 % en moles, du composé réactif (N) sont fournis par des espèces ne contenant pas plus de trois groupes acryloyle.

5. Composition pour jet d'encre selon l'une des revendications 1 à 4, où le rapport molaire de groupes acryloyle contenus sur groupes époxy contenus du composé (D) est de 0,4 à 1,3.

6. Composition pour jet d'encre selon l'une des revendications 1 à 5, dans laquelle au moins 10 % en poids des espèces de (D), préférablement au moins 30 % en poids des espèces de (D), sont fournies par des diépoxydes, préférablement par le 3,4-époxycyclohexanecarboxylate de 3,4-époxycyclohexylméthyle.

7. Composition pour jet d'encre selon l'une des revendications 1 à 6, où des espèces du photoinitiateur de radicaux (R) sont fournies par des photoinitiateurs à base d'oxyde de phosphine, préférablement par l'oxyde de diphényl(2,4,6-triméthylbenzoyl)phosphine et/ou l'oxyde de phénylbis(2,4,6-triméthylbenzoyl)phosphine.

8. Composition pour jet d'encre selon l'une des revendications 1 à 7, où des espèces de l'initiateur/du catalyseur de durcissement d'époxy (C) sont fournies par des superacides bloqués, préférablement ceux à base d'acide trifluorométhanesulfonique, d'acide fluorosulfurique, d'acide para-toluènesulfonique, d'acide trifluoroantimonatesulfonique, d'hexafluoroantimonate et/ou de tétrakis(pentafluorophényl)borate.

9. Composition pour jet d'encre selon l'une des revendications 1 à 8 dans laquelle 90 à 100 % en poids, préférablement 97 à 100 % en poids, des ingrédients contenus sont fournis par des espèces de (M), (N), (R), (D) et (C).

10. Composition pour jet d'encre selon l'une des revendications 1 à 8 possédant une viscosité de 10 à 40 mPas à 45 °C, où la viscosité est mesurée sur un rhéomètre rotatif régulé thermiquement dans une géométrie cône-plaque, diamètre de cône : 60 mm, distance sans espace : 0,061 mm, angle de cône : 0,5°, vitesse de cisaillement 600 s⁻¹, à des températures de 40 à 60 °C avec une rampe de chauffage de 2 K/min selon la norme DIN EN ISO 3219.

11. Composition pour jet d'encre selon l'une des revendications 1 à 9, dans laquelle des espèces de l'initiateur/du catalyseur de durcissement d'époxy (C) sont fournies par un initiateur de polymérisation ionique, qui est préférablement utilisé en tant qu'agent de durcissement latent.

12. Composition pour jet d'encre selon l'une des revendications 1 à 11, contenant de plus des stabilisants, des agents mouillants, un inhibiteur de polymérisation radicalaire, des antimousses et/ou des pigments.

13. Procédé pour l'impression d'un objet tridimensionnel comprenant les étapes de :
(a) projection de la composition pour jet d'encre selon l'une des revendications 1 à 12 au moyen d'une machine à imprimer pour former une couche en un motif configuré correspondant à la forme de l'objet,
(b) irradiation de la couche formée pour former une couche photo-durcie,
(c) répétition de manière séquentielle des étapes (a) et (b) pour former une pluralité de couches photo-durcies pour préparer un corps vert de l'objet tridimensionnel et
(d) chauffage dudit corps vert pour post-durcir l'objet tridimensionnel.

14. Procédé selon la revendication 13, dans lequel de plus une encre de support est imprimée et durcie afin de stabiliser le corps vert, où l'encre de support durcie est soluble dans l'eau et est éliminée après l'étape c) et avant la réalisation de l'étape (d) par traitement avec un liquide de lavage aqueux.

15. Procédé selon l'une des revendications 13 ou 14 dans lequel l'étape (d) est réalisée d'une telle manière que des températures comprises entre 110 et 140 °C sont maintenues au moins pendant 5 heures.

16. Procédé selon la revendication 15, où dans l'étape de chauffage (d) l'augmentation pertinente de la température est limitée à 2 K/min.

17. Procédé selon l'une des revendications 13 à 16 dans lequel dans l'étape (b) l'irradiation est réalisée au moyen d'une lampe UV et le temps d'exposition de la couche d'encre est de 0,1 à 2 s.

18. Objet tridimensionnel fabriqué selon le procédé selon l'une des revendications 13 à 17.

19. Utilisation d'une composition pour jet d'encre selon l'une des revendications 1 à 12 pour la fabrication d'un objet tridimensionnel.
